# EUROPEAN PATENT SPECIFICATION

(11) **EP 4 365 393 B1**
(45) Date of publication and mention of the grant of the patent: **20.08.2025**
(21) Application number: 22205293.8
(22) Date of filing: 03.11.2022
(51) Int. Cl.: E05B 81/86, E05B 47/00

(54) **ELECTRONICALLY CONTROLLED DOOR LATCH**
ELEKTRONISCH GESTEUERTER TÜRRIEGEL
VERROU DE PORTE À COMMANDE ÉLECTRONIQUE

(43) Date of publication of application: 08.05.2024
(73) Proprietor: Kiekert AG, 42579 Heiligenhaus (DE)
(72) Inventor: Mutti, Carlo, 6945 Origlio (CH); Merletti, Marco, 21010 Arsago Seprio (Varese) (IT)
(74) Representative: Michalski Hüttermann & Partner Patentanwälte mbB

(56) References cited:
- WO-A1-2005/047628
- WO-A1-2020/222023
- DE-U1- 202013 103 042
- US-A1- 2014 088 825

## Description

### Technical Field

The invention relates to an electronically controlled door latch arrangement for a motor vehicle, the arrangement comprising an electronically controlled door latch comprising a supercapacitor group and an electric motor, whereby the supercapacitor group is configured for being charged by a main supply voltage received from a main power source of the motor vehicle during a normal operating condition and the electric motor is configured for actuating the door latch based on the main supply voltage. The invention further relates to a method for operating an electronically controlled door latch arrangement of a motor vehicle, the arrangement comprising an electronically controlled door latch comprising a supercapacitor group and an electric motor, whereby the supercapacitor group is configured for being charged by a main supply voltage received from a main power source of the motor vehicle and comprising the step of: actuating the door latch with an electric motor based on the main supply voltage.

### Background Art

Several automotive systems require the presence in a vehicle of a backup energy source, to provide electrical energy in substitution, or as an aid to a main power source of the vehicle, in case of failure or interruption of the same main power source. Such backup power source is usually kept in a charged state during normal operation, by the main power source of the vehicle, so as to be readily available as soon as the need arises, for example in case of an accident or crash of the vehicle.

Since electronically controlled door latches, abbreviated as eLatches, are more and more replacing pure mechanical latches, one important safety related topic is how to release a door in case there is no main power source nor backup power source available. When in addition no more mechanical bowden cable or lever for the electronically controlled door latches are available, opening a car door can be very difficult without energy. Such case may occur after a crash or damage of the vehicle.

Further, from vehicle makers there is an increasing focus on long term parking situations, where an electronic control unit directly manages an eLatch power supply and goes to sleep to save power. State of art eLatches include supercapacitors as storage elements that may achieve a few days backup coverage but cannot deliver energy for long term parking situation of more than one week.

WO 2005/047 628 A1 describes a latching assembly for being used on a door of a motor vehicle, wherein the motor vehicle includes a main electric supply and a striker. The latching assembly also includes a backup battery disposed adjacent the motor for supplying electric power when the motor is disconnected from the main electric supply. The backup battery being charged by a constant current battery charger.

WO 2020/222 023 A1 describes a locking device to lock and/or to unlock a movable closure element like a door, a lid, etc. in a lockable object like a building, a ship, a vehicle, a train or the like, wherein the locking device has an electric control unit and/or a drive unit to control and/or to drive a movement of the movable closure element.

US 2014/088 825 A1 describes methods and systems for unlatching a power latch system of a door.

### Summary of invention

It is therefore an object of the invention to provide an easy, cheap and reliable solution for feeding an electronically controlled door latch with energy in such long term parking situations.

The object of the invention is solved by the features of the independent claims. Preferred implementations are detailed in the dependent claims.

Thus, the object is solved by an electronically controlled door latch arrangement for a motor vehicle, the arrangement comprising an unrechargeable auxiliary battery configured for supplying an auxiliary supply voltage, and
an electronically controlled door latch comprising a supercapacitor group and an electric motor, whereby
the supercapacitor group is configured for being charged by a main supply voltage received from a main power source of the motor vehicle during a normal operating condition or by the auxiliary supply voltage and for providing a backup supply voltage during a backup operating condition when the main supply voltage is unavailable, and
the electric motor is configured for actuating the electronically controlled door latch based on the main supply voltage or on the backup supply voltage.

During the normal operation condition, i.e. when the motor vehicle is fully operational, the supercapacitor group can be charged by a dedicated charger with energy coming from the main power source of the motor vehicle. During power losses, for example when an accident happened, the supercapacitor group may deliver energy for operating the electronically controlled door latch for some initial first days. During long term power losses, the primary battery provides energy to maintain an operating voltage of the supercapacitor group and such wise for operating the electronically controlled door latch, for example via an electronic control unit. Actuating the electric motor of the electronically controlled door latch usually requires high current pulses that an unrechargeable auxiliary battery cannot provide alone. Thus, energy provided by the supercapacitor group is required for driving the electric motor. Said energy of the supercapacitor group is maintained by the auxiliary battery.

The normal or regular operating condition should be understood as a mode in which the main power supply provides the electrical energy for operating the electric motor. The backup operating condition should be understood as a mode in which the main power supply does not provide electrical energy anymore for operating the electric motor.

The main power source is preferably provided as a battery of the motor vehicle for example delivering 12 or 24 V DC. During the normal operating condition the main power source charges the supercapacitor group providing the backup supply voltage. The motor vehicle and/or the electronically controlled door latch may in this respect comprise a charger as described below, in particular controllable by an electronic control unit as also described below, for recharging the supercapacitor group, starting from the main supply voltage, whenever power from the main supply voltage is available. The electric motor is preferably configured for actuating the electronically controlled door latch in respect to locking and unlocking a door of the motor vehicle.

More generally, the expression "electronically controlled door latch" should be understood as a means for locking a movable element between an open position and a closed position, thereby opening and closing an access to an inner compartment of a motor vehicle, for example including, boot, rear hatches, bonnet lid or other closed compartments, window regulators, sunroofs, in addition to the side doors of a motor vehicle. The proposed electronically controlled door latch allows for complying with security and safety regulations requiring opening for example of the vehicle doors even in case of failure of the main power supply of the vehicle or in case of interruptions or breaking of the electrical connection between the main power supply and the vehicle doors. Such kind of situation may occur, for example, in case of an accident or crash involving the vehicle.

The vehicle can be provided as an electrical vehicle. The electronically controlled door latch and/or the electronically controlled door latch arrangement may comprise a housing, made of metal, plastics or a combination thereof. The supercapacitor group and/or the electric motor, are preferably provided within the housing of the electronically controlled door latch, while the unrechargeable auxiliary battery can be provided inside or outside the housing. The electronically controlled door latch may comprise a four-quadrant controller, which can be applied by the control unit configured with a pulse width modulated signal for operating the electric motor. Pulse width modulating the four-quadrant controller means preferably that the four-quadrant controller is switched based on pulse width modulated signals. Pulse-width modulation, PWM, or pulse-duration modulation, PDM, is generally understood as a method of reducing an average power delivered by an electrical signal, by effectively chopping the signal up into discrete parts. Particularly, the electric motor can be operated based on such PWM signal by switching the backup supply voltage and/or the main supply voltage on and off. By varying the pulse width of the PWM signal, the speed of the electric motor can be controlled.

The four-quadrant controller can be provided as H-bridge and/or comprise switches provided as MOSFETs. Generally, a H-bridge is an electronic circuit that switches the polarity of a voltage applied to a load, here the main supply voltage and/or the backup supply voltage as voltage and the electric motor as load. By means of such H-bridge the electric motor can be run forwards or backwards, for example for locking or unlocking the door of the motor vehicle. The name is derived from its common schematic diagram representation, with four switches configured as branches of a letter "H" and a load i.e. the electric motor connected as the cross-bar. A solid-state H-bridge is typically constructed using opposite polarity switches, such as PNP bipolar junction transistors or p-channel MOSFETs connected to the main power source and n-channel MOSFETs connected to ground. Alternatively, p-channel or n-channel MOSFETs can be used on both sides.

According to the invention the auxiliary battery is provided as an unrechargeable battery. The primary battery preferably has a low leakage. Advantageously the auxiliary battery is included in a vehicle maintenance plan, for example for a planned exchange each 3 to 4 years. The auxiliary battery may deliver a voltage of 1,5 or 3 V DC and/or can be provided as a D cell, as a C cell, as an AA cell, as an AAA cell, as a PP3 battery, as a button cell, such as CR2032 or LR44, or a combination or plurality thereof.

In a further preferred implementation the electronically controlled door latch arrangement or the electronically controlled door latch comprises a logic element configured for connecting the auxiliary battery to the supercapacitor group at a predefined time since the main supply voltage has become unavailable. The logic element can be provided as a diode and/or may serve in particular for connecting the auxiliary battery to the supercapacitor group for recharging the supercapacitor group once the voltage of the supercapacitor group is below a threshold and when the main power source is not available anymore.

According to another preferred implementation the time is 5, 7 or 10 days. Thus, for example in the long-term parking situation with more than 5, 7 or 10 days the auxiliary battery can such wise provide energy for charging the supercapacitor group. In an alternative embodiment the electronically controlled door latch arrangement or the electronically controlled door latch comprises the logic element configured for connecting the auxiliary battery to the supercapacitor group when the main supply voltage has become unavailable and if the voltage of the supercapacitor group is below a threshold.

In a further preferred implementation the electronically controlled door latch comprises a switch arranged between the auxiliary battery and the supercapacitor group. The switch can be provided as a transistor, for example as a MOSFET, or any other semiconductor switching element.

According to another preferred implementation the electronically controlled door latch comprises an electronic control unit configured for controlling the electric motor and operated based on the main supply voltage or on the auxiliary supply voltage. The control unit can be provided as a microprocessor, microcontroller or analogous computing module, configured to control operation of the electric motor in particular via the four-quadrant controller, in particular also based on a value of the main voltage and/or of the backup supply voltage. Besides that the control unit may be configured for connecting to other controllers of the motor vehicle, such for example a control device of the motor vehicle.

The control unit can be further configured for determining if the value of the main supply voltage decreases below a predetermined threshold value so as to determine that a crash operating condition is occurring. In this respect the electronic control unit may comprise an embedded memory, for example a non-volatile random access memory, coupled to a computing module, storing suitable programs and computer instructions, for example in the form of a firmware. The control unit may alternatively comprise a logical circuit of discrete components to carry out the functions of the computing module and memory.

In a further preferred implementation the door latch is provided bowden cable-free and/or lever-free. The terms bowden cable-free and/or lever-free means that no bowden cable respectively no lever is available. Thus, when no more mechanical bowden cable or lever are available at the electronically controlled door latch, the proposed solution allows for opening the vehicle door if the main power source of the vehicle is not available anymore.

According to another preferred implementation the supercapacitor group comprises at least a first supercapacitor cell, preferably at least a first and a second supercapacitor cells, connected to each other, to jointly provide the backup supply voltage. A supercapacitor cell, also referred to as supercapacitor, supercap, SC, or called an ultracapacitor, is typically a high-capacity capacitor with a capacitance value much higher than other capacitors, but with lower voltage limits, that bridges the gap between electrolytic capacitors and rechargeable batteries. The supercapacitor typically stores 10 to 100 times more energy per unit volume or mass than electrolytic capacitors, can accept and deliver charge much faster than batteries, and tolerates many more charge and discharge cycles than rechargeable batteries.

The supercapacitor cell comprises, when fully charged, for example the voltage of 2,45 V. Thus, if the first and the second supercapacitor cells are connected to each other, the jointly provided backup supply voltage equals **4,9 V.** Preferably, at least two, two, three or four supercapacitor cells are connected in series forming the supercapacitor group. The vehicle battery preferably comprises a voltage of 12 V. The motor vehicle and/or the electronically controlled door latch may comprise a charge module, controllable by the control unit, to recharge the supercapacitor group, starting from the main supply voltage, whenever power from the main supply voltage is available.

In a further preferred implementation the electronically controlled door latch comprises the auxiliary battery. In such case the auxiliary battery is included and/or installed within the electronically controlled door latch. Alternatively, the auxiliary battery can be separated from the electronically controlled door latch, for example installed distant to the electronically controlled door latch and/or the door.

The object is further solved by a motor vehicle comprising the electronically controlled door latch arrangement according as described before, a charger for the supercapacitor group, whereby the main power source is connected via the charger to the supercapacitor group.

The motor vehicle and/or the electronically controlled door latch may in this respect comprise the charger, in particular controllable by the electronic control unit, for recharging the supercapacitor group, starting from the main supply voltage, whenever power from the main supply voltage is available.

The object is further solved by a method for operating an electronically controlled door latch arrangement of a motor vehicle, the arrangement comprising
an unrechargeable auxiliary battery configured for supplying an auxiliary supply voltage, and
an electronically controlled door latch comprising a supercapacitor group and an electric motor, whereby
the supercapacitor group is configured for being charged by a main supply voltage received from a main power source of the motor vehicle during a normal operating condition or by the auxiliary supply voltage and for providing a backup supply voltage during a backup operating condition when the main supply voltage is unavailable, and comprising the step of:
   actuating the door latch with an electric motor based on the main supply voltage or on the backup supply voltage.

Further implementations and advantages of the method can be derived by the person skilled in the art from the electronically controlled door latch as described before.

### Brief description of drawings

These and other aspects of the invention will be apparent from and elucidated with reference to the implementation described hereinafter.

In the drawings:

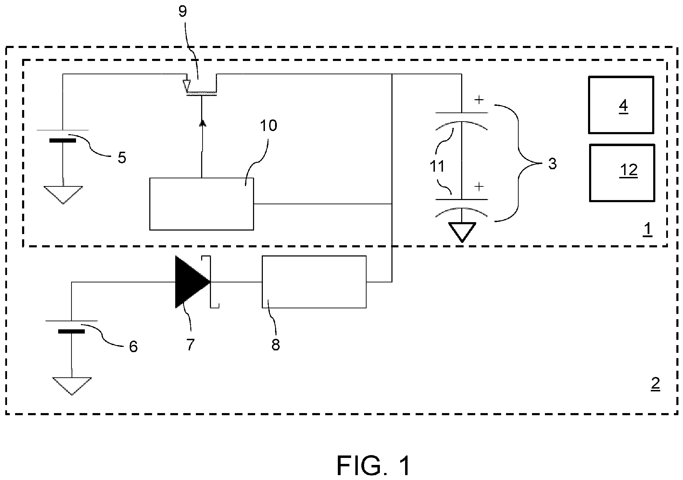

- Fig. 1: shows a schematic circuit diagram of an electronically controlled door latch arrangement for a motor vehicle comprising an electronically controlled door latch according to a preferred implementation.

### Description of implementations

Fig. 1 shows a schematic circuit diagram of an electronically controlled door latch arrangement for an only schematically depicted motor vehicle 2 comprising an electronically controlled door latch 1. The motor vehicle 2 includes for side doors, not shown, which are each equipped with one electronically controlled door latch 1. Besides that the electronically controlled door latch 1 can be associated to rear hatches, bonnet lid or other closed compartments, window regulators, sunroofs, in addition to the side doors of such motor vehicle 2.

The electronically controlled door latch 1 comprises a housing made of plastic, metal or a combination thereof. The housing houses arranged therein a supercapacitor group 3 and an electric motor 4. Further, an auxiliary battery 5 provided as primary battery is housed within the housing respectively is part of the electronically controlled door latch 1. Said auxiliary battery 5 can also be arranged outside the housing respectively outside the electronically controlled door latch 1 within the motor vehicle 2. The electronically controlled door latch 1 is provided without a bowden cable and/or a lever.

The motor vehicle 2 comprises a main power source 6 provided as standard vehicle battery known from prior art and delivering a main supply voltage of 12 V DC during a normal operating condition. The main power source 6 is connected via a rectifier diode 7 to a charger 8, which is turn is connected to the supercapacitor group 3 for charging the supercapacitor group 3.

Thus, during a normal operation condition, the supercapacitor group 3 is charged by a main supply voltage received from the main power source 6 of the motor vehicle 2. Since the auxiliary battery 5 is connected via a transistor switch 9 to the supercapacitor group 3, the supercapacitor group 3 can also be charged by an auxiliary supply voltage received from the auxiliary battery 5.

When the main supply voltage is unavailable, for example because the motor vehicle 2 had an accident which destroyed an electrical connection between the main power source 6 and the electric motor 4, the supercapacitor group 3 provides a backup supply voltage such that the electric motor 4 can actuate the electronically controlled door latch 1 based on said backup supply voltage instead of the main supply voltage during the normal operation condition.

The electronically controlled door latch 1 further comprises a logic element 10 which operates the switch 9 for connecting the auxiliary battery 5 to the supercapacitor group 3 at a predefined time since the main supply voltage has become unavailable, for example during a long-term parking situation with a time of 5, 7 or 10 days. The electronically controlled door latch 1 even further comprises a computerized electronic control unit 12, which controls the electric motor 4 and being operated based on the main supply voltage or on the auxiliary supply voltage.

The supercapacitor group 3 comprises a first and a second supercapacitor cells 6 connected in series, with the first supercapacitor cell 6 connected with its negative pole to ground. Each supercapacitor cell delivers, when fully charged, a voltage of 2,45 V DC i.e. the supercapacitor group 3 delivers a backup supply voltage of 4,9 V DC. Besides that more than two supercapacitors cells 6 can be connected in series and such wise delivering a higher backup supply voltage.

While the invention has been illustrated and described in detail in the drawings and foregoing description, such illustration and description are to be considered illustrative or exemplary and not restrictive; the invention is not limited to the disclosed implementations, but defined by the appended claims. Other variations to the disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference sign list

- 1: electronically controlled door latch
- 2: motor vehicle
- 3: supercapacitor group
- 4: electric motor
- 5: auxiliary battery
- 6: main power source
- 7: rectifier diode
- 8: charger
- 9: switch
- 10: logic element
- 11: supercapacitor cell
- 12: control unit
- Vbatt: main supply voltage
- Vsc: backup supply voltage

## Claims

1. Electronically controlled door latch arrangement for a motor vehicle (2), the arrangement comprising
an unrechargeable auxiliary battery (5) configured for supplying an auxiliary supply voltage, and
an electronically controlled door latch (1) comprising a supercapacitor group (3) and an electric motor (4), whereby
the supercapacitor group (3) is configured for being charged by a main supply voltage received from a main power source (6) of the motor vehicle (2) during a normal operating condition or by the auxiliary supply voltage and for providing a backup supply voltage during a backup operating condition when the main supply voltage is unavailable, and
the electric motor (4) is configured for actuating the door latch (1) based on the main supply voltage or on the backup supply voltage.

2. Electronically controlled door latch arrangement according to the previous claim, whereby the electronically controlled door latch (1) comprises a logic element (10) configured for connecting the unrechargeable auxiliary battery to the supercapacitor group (3) at a predefined time since the main supply voltage has become unavailable.

3. Electronically controlled door latch arrangement according to the previous claim, whereby the time is 5, 7 or 10 days.

4. Electronically controlled door latch arrangement according to any of the previous claims, whereby the electronically controlled door latch (1) comprises a switch (5) arranged between the unrechargeable auxiliary battery (5) and the supercapacitor group (3).

5. Electronically controlled door latch arrangement according to any of the previous claims, whereby the electronically controlled door latch (1) comprises an electronic control unit (12) configured for controlling the electric motor (4) and operated based on the main supply voltage or on the auxiliary supply voltage.

6. Electronically controlled door latch arrangement according to any of the previous claims, whereby the door latch (1) is provided bowden cable-free and/or lever-free.

7. Electronically controlled door latch arrangement according to any of the previous claims, whereby the supercapacitor group (3) comprises at least a first supercapacitor cell (11), preferably at least a first and a second supercapacitor cells (11), connected to each other, to jointly provide the backup supply voltage.

8. Electronically controlled door latch arrangement according to any of the previous claims, whereby the electronically controlled door latch (1) comprises the unrechargeable auxiliary battery (5).

9. Motor vehicle (2) comprising the electronically controlled door latch arrangement according to any of the previous claims, a charger (8) for the supercapacitor group (3), whereby the main power source (6) is connected via the charger (8) to the supercapacitor group (3).

10. Method for operating an electronically controlled door latch arrangement of a motor vehicle (2), the arrangement comprising
an unrechargeable auxiliary battery (5) configured for supplying an auxiliary supply voltage, and
an electronically controlled door latch (1) comprising a supercapacitor group (3) and an electric motor (4), whereby
the supercapacitor group (3) is configured for being charged by a main supply voltage received from a main power source (6) of the motor vehicle (2) during a normal operating condition or by the auxiliary supply voltage and for providing a backup supply voltage during a backup operating condition when the main supply voltage is unavailable, and comprising the step of:
actuating the door latch (1) with an electric motor (4) based on the main supply voltage or on the backup supply voltage.

## Patentansprüche

1. Elektronisch gesteuerte Türverriegelungsanordnung für ein Kraftfahrzeug (2), umfassend
eine nicht wiederaufladbare Hilfsbatterie (5), die zum Bereitstellen einer Hilfsspannung ausgelegt ist, und
eine elektronisch betätigte Türverriegelungseinrichtung (1) mit einer Superkondensator-Gruppe (3) und einem Elektromotor (4), wobei
die Superkondensator-Gruppe (3) so ausgelegt ist, dass sie durch eine von einer Hauptenergiequelle (6) des Kraftfahrzeugs (2) bereitgestellte Hauptversorgungsspannung im normalen Betriebsmodus oder durch die Hilfsspannung aufgeladen wird und in einem Notbetriebszustand, wenn die Hauptversorgungsspannung nicht verfügbar ist, eine Ersatzversorgungsspannung bereitstellt, und
der Elektromotor (4) dazu eingerichtet ist, die Türverriegelungseinrichtung (1) basierend auf der Haupt- oder Ersatzversorgungsspannung anzutreiben.

2. Türverriegelungsanordnung gemäß dem vorhergehenden Anspruch, bei der die elektronisch betätigte Türverriegelungseinrichtung (1) ein logisches Steuerelement (10) aufweist, das dafür vorgesehen ist, die nicht wiederaufladbare Hilfsbatterie (5) nach Ablauf eines vorgegebenen Zeitintervalls nach Ausfall der Hauptversorgungsspannung mit der Superkondensator-Gruppe (3) zu verbinden.

3. Türverriegelungsanordnung gemäß dem vorhergehenden Anspruch, bei der das genannte Zeitintervall 5, 7 oder 10 Tage beträgt.

4. Türverriegelungsanordnung gemäß einem der vorhergehenden Ansprüche, bei der die Türverriegelungseinrichtung (1) einen Schalter (5) aufweist, der zwischen der nicht wiederaufladbaren Hilfsbatterie (5) und der Superkondensator-Gruppe (3) angeordnet ist.

5. Türverriegelungsanordnung gemäß einem der vorhergehenden Ansprüche, bei der die elektronisch betätigte Türverriegelungseinrichtung (1) eine elektronische Steuereinheit (12) umfasst, die zur Ansteuerung des Elektromotors (4) eingerichtet ist und entweder durch die Haupt- oder die Hilfsspannung betrieben wird.

6. Türverriegelungsanordnung gemäß einem der vorhergehenden Ansprüche, bei der die Türverriegelungseinrichtung (1) Bowdenzug-frei und/oder Hebel-frei ausgeführt ist.

7. Türverriegelungsanordnung gemäß einem der vorhergehenden Ansprüche, bei der die Superkondensator-Gruppe (3) mindestens eine erste Superkondensator-Zelle (11), vorzugsweise eine erste und eine zweite Superkondensator-Zelle (11), umfasst, die miteinander verbunden sind, um gemeinsam die Ersatzversorgungsspannung bereitzustellen.

8. Türverriegelungsanordnung gemäß einem der vorhergehenden Ansprüche, bei der die elektronisch gesteuerte Türverriegelungseinrichtung (1) die nicht wiederaufladbare Hilfsbatterie (5) umfasst.

9. Kraftfahrzeug (2) mit einer Türverriegelungsanordnung gemäß einem der vorhergehenden Ansprüche sowie einem Ladegerät (8) für die Superkondensator-Gruppe (3), wobei der Hauptenergiequelle (6) über das Ladegerät (8) mit der Superkondensator-Gruppe (3) verbunden ist.

10. Verfahren zum Betrieb einer elektronisch gesteuerten Türverriegelungsanordnung eines Kraftfahrzeugs (2), wobei die Anordnung umfasst:
eine nicht wiederaufladbare Hilfsbatterie (5), die eine Hilfsspannung bereitstellt, und
eine elektronisch betätigte Türverriegelungseinrichtung (1) mit einer Superkondensator-Gruppe (3) und einem Elektromotor (4), wobei
die Superkondensator-Gruppe (3) durch eine vom Hauptenergiequelle (6) des Kraftfahrzeugs (2) bereitgestellte Hauptversorgungsspannung im normalen Betrieb oder durch die Hilfsspannung aufladbar ist und in einem Notbetrieb eine Ersatzversorgungsspannung liefert, und
das Verfahren den Schritt umfasst:
Betätigen der Türverriegelungseinrichtung (1) mittels des Elektromotors (4) basierend auf der Haupt- oder Ersatzversorgungsspannung.

## Revendications

1. Agencement de verrouillage de porte commandé électroniquement pour un véhicule automobile (2), comprenant une batterie auxiliaire non rechargeable (5) conçue pour fournir une tension d'alimentation auxiliaire, et un dispositif de verrouillage de porte commandé électroniquement (1) comprenant un groupe de supercondensateurs (3) et un moteur électrique (4), le groupe de supercondensateurs (3) étant conçu pour être chargé soit par une tension d'alimentation principale fournie par une source d'énergie principale (6) du véhicule automobile (2) en mode de fonctionnement normal, soit par la tension d'alimentation auxiliaire, et pour fournir une tension d'alimentation de secours en mode de fonctionnement de secours lorsque la tension d'alimentation principale est indisponible, et le moteur électrique (4) étant conçu pour actionner le dispositif de verrouillage de porte (1) en fonction de la tension d'alimentation principale ou de la tension d'alimentation de secours.

2. Agencement de verrouillage de porte selon la revendication précédente, dans lequel le dispositif de verrouillage de porte commandé électroniquement (1) comprend un élément logique (10) conçu pour connecter la batterie auxiliaire non rechargeable (5) au groupe de supercondensateurs (3) après un intervalle de temps prédéfini suivant la défaillance de la tension d'alimentation principale.

3. Agencement de verrouillage de porte selon la revendication précédente, dans lequel ledit intervalle de temps est de 5, 7 ou 10 jours.

4. Agencement de verrouillage de porte selon l'une quelconque des revendications précédentes, dans lequel le dispositif de verrouillage de porte (1) comprend un interrupteur (5) disposé entre la batterie auxiliaire non rechargeable (5) et le groupe de supercondensateurs (3).

5. Agencement de verrouillage de porte selon l'une quelconque des revendications précédentes, dans lequel le dispositif de verrouillage de porte commandé électroniquement (1) comprend une unité de commande électronique (12) conçue pour commander le moteur électrique (4) et fonctionnant en fonction de la tension d'alimentation principale ou de la tension d'alimentation auxiliaire.

6. Agencement de verrouillage de porte selon l'une quelconque des revendications précédentes, dans lequel le dispositif de verrouillage de porte (1) est conçu sans câble Bowden et/ou sans levier.

7. Agencement de verrouillage de porte selon l'une quelconque des revendications précédentes, dans lequel le groupe de supercondensateurs (3) comprend au moins une première cellule de supercondensateur (11), de préférence une première et une seconde cellule de supercondensateur (11), connectées entre elles pour fournir conjointement la tension d'alimentation de secours.

8. Agencement de verrouillage de porte selon l'une quelconque des revendications précédentes, dans lequel le dispositif de verrouillage de porte commandé électroniquement (1) comprend la batterie auxiliaire non rechargeable (5).

9. Véhicule automobile (2) comprenant un agencement de verrouillage de porte selon l'une quelconque des revendications précédentes ainsi qu'un chargeur (8) pour le groupe de supercondensateurs (3), la source d'énergie principale (6) étant connectée au groupe de supercondensateurs (3) via le chargeur (8).

10. Procédé de fonctionnement d'un agencement de verrouillage de porte commandé électroniquement d'un véhicule automobile (2), comprenant : une batterie auxiliaire non rechargeable (5) conçue pour fournir une tension d'alimentation auxiliaire, et un dispositif de verrouillage de porte commandé électroniquement (1) comprenant un groupe de supercondensateurs (3) et un moteur électrique (4), le groupe de supercondensateurs (3) étant conçu pour être chargé soit par une tension d'alimentation principale fournie par une source d'énergie principale (6) du véhicule automobile (2) en fonctionnement normal, soit par la tension d'alimentation auxiliaire, et pour fournir une tension d'alimentation de secours en fonctionnement de secours, et le procédé comprenant l'étape consistant à actionner le dispositif de verrouillage de porte (1) au moyen du moteur électrique (4) en fonction de la tension d'alimentation principale ou de la tension d'alimentation de secours.
